Europäisches Patentamt

European Patent Office

Office européen des brevets

(19)

(11) Veröffentlichungsnummer: **0 341 648**

**A2**

(12) **EUROPÄISCHE PATENTANMELDUNG**

(21) Anmeldenummer: 89108287.7

(22) Anmeldetag: 09.05.89

(51) Int. Cl.⁴: **B01J 13/02 , B41M 5/00**

(30) Priorität: 11.05.88 DE 3816058

(43) Veröffentlichungstag der Anmeldung:
**15.11.89 Patentblatt 89/46**

(84) Benannte Vertragsstaaten:
**AT BE CH DE ES FR GB GR IT LI LU NL SE**

(71) Anmelder: **DRESCHER GESCHÄFTSDRUCKE GMBH**
**Drescherstrasse**
**D-7255 Rutesheim(DE)**

(72) Erfinder: **Uhlemayr, Reinhold**
**Hermann-Hesse-Weg 4**
**D-7255 Rutesheim(DE)**

(74) Vertreter: **Hoeger, Stellrecht & Partner**
**Uhlandstrasse 14 c**
**D-7000 Stuttgart 1(DE)**

(54) **Mikrokapseln und Verfahren zu ihrer Herstellung.**

(57) Um Mikrokapseln mit einem Kern und einer diesen umgebenden, in einer Polyreaktion aus einem monomeren, oligomeren und/oder vorpolymerisierten Wandmaterial gebildeten Wandung in einfacher Weise an unterschiedliche Anforderungen chemischer, physikalischer oder mechanischer Art anpassen zu können, wird vorgeschlagen, daß an die Wandung chemisch ein weiteres Polymer gebunden wird.

EP 0 341 648 A2

## MIKROKAPSELN UND VERFAHREN ZU IHRER HERSTELLUNG

Die Erfindung betrifft Mikrokapseln mit einem Kern und einer in einer Polyreaktion aus einem momomeren, oligomeren und/oder vorpolymerisierten Wandmaterial gebildeten Wandung sowie ein Verfahren zu ihrer Herstellung.

Mikrokapseln und Verfahren der eingangs beschriebenen Art sind in vielfältiger Weise bekannt, wobei Ziel dieser Verfahren stets die vollständig ausgehärtete Wandung der Kapseln ist.

Die mechanischen physikalischen und chemischen Eigenschaften der Mikrokapseln hängen hierbei von den verwendeten Reaktionssystemen bei der Herstellung der Kapselwandung ab.

Bei der Weiterverarbeitung der Mikrokapseln treten je nach Wandungstyp der Mikrokapseln unterschiedliche spezifische Probleme auf, so daß zu einer sicheren Handhabung der Mikrokapseln in weiteren Verarbeitungsprozessen umfangreiches Know-how benötigt wird.

Bei geänderten Anforderungen an die chemischen, physikalischen oder mechanischen Eigenschaften der Mikrokapseln mußte man bisher den Mikrokapseltyp wechseln, was zur Folge hatte, daß ein völlig neues Know-how im Umgang mit der neuen Kapsel erworben werden mußte.

Aufgabe der Erfindung ist es deshalb, eine Mikrokapsel der eingangs beschriebenen Art vorzuschlagen, die bei gleichbleibendem Wandmaterial in einfacher Weise an unterschiedliche Anforderungen chemischer, physikalischer oder mechanischer Art angepaßt werden kann.

Diese Aufgabe wird bei einer Mikrokapsel der gattungsbildenden Art erfindungsgemäß dadurch gelöst, daß an die Wandung chemisch ein weiteres Polymer gebunden ist.

Bei diesen Mikrokapseln ist es zum einen möglich, mit dem gleichen Grundtyp der Mikrokapsel, d.h. bei Mikrokapseln, die dasselbe Wandmaterial aufweisen mit einer chemischen Modifizierung der Wandung den unterschiedlichsten Anforderungen, chemischer, physikalischer und/oder mechanischer Art Rechnung zu tragen, ohne den Kapseltypus zu wechseln. Das Know-how, das im Umgang mit einem Kapseltypus in dem entsprechenden Produktionsbetrieb erarbeitet wurden kann somit weiterverwendet werden, wobei eine Anpassung der Kapseleigenschaften an die spezifischen Anforderungen trotzdem gezielt möglich ist.

Bei bevorzugten Mikrokapseln umfaßt das weitere Polymer ein Mischpolymer.

Vorzugsweise wird das Wandmaterial der Mikrokapsel mehrdimensional vernetzt sein und auch bei der Auswahl des weiteren Polymers ist es von Vorteil, wenn dieses mehrdimensional vernetzbar ist.

Als zweckmäßig und gut handhabbar haben sich solche Wandmaterialien erwiesen, die polykondensierbar sind oder Polyadditions-Reaktionen eingehen.

Entsprechende Vorteile ergeben sich bei der Auswahl des weiteren Polymers, wenn hier ebenfalls auf ein Reaktions system zurückgegriffen wird, das eine Polykondensations-oder eine Polyadditions-Reaktion eingeht.

Vorzugsweise umfaßt das Wandmaterial ein Polyurethanharz. Besonders günstige Eigenschaften weist die Kapselwandung auf, wenn diese zwei unterschiedliche Polyurethanharzfraktionen umfaßt, wobei hier schon mit der Wahl der Reaktionspartner eine breite Variationsbreite bezüglich der erwarteten chemischen, physikalischen und/oder mechanischen Eigenschaften der Kapselwandungen abgedeckt werden kann.

Bei der Verwendung der Mikrokapseln bei der Herstellung von Reaktionsdurchschreibepapier werden die Mikrokapseln beispielsweise mit Bindemitteln auf unbehandeltes Papier aufgebracht. Kritisch ist hierbei sowohl die Wahl als auch die exakte Zusammensetzung des Bindemittels und auch die Mengenverhältnisse von Bindemittel und Mikrokapseln. Diese Probleme können mit der vorliegenden Erfindung in eleganter Weise dadurch gelöst werden, daß das Bindemittel als weiteres Polymer direkt chemisch an die Wandung der Mikrokapseln gebunden wird. Der Anwender der Mikrokapseln erhält damit bereits ein fertig "abgemischtes" Produkt, dem er nur die weiteren, unkritischen Zusatzstoffe, wie beispielsweise Abstandshalter, zufügen muß, um eine fertige und problemlos zu handhabende Beschichtungsmischung zu erhalten.

Bei besonders großen Anforderungen an die mechanische Festigkeit der Mikrokapseln ist vorgesehen, eine weitere Kapselwandung aus dem weiteren Polymer zu bilden, wobei sich insbesondere durch die chemische Bindung der weiteren oder außenliegenden Kapselwandung an die erste oder innenliegende Wandung eine ausgezeichnete Verbesserung der mechanischen Eigenschaften der Mikrokapseln ergibt.

Selbstverständlich kann nun an die weitere, außenliegende Kapselwandung ein Bindemittel chemisch gebunden werden mit den oben beschriebenen Vorteilen.

Ebenso läßt sich das weitere Polymer aus der Klasse der Thermoplaste auswählen und chemisch an die Kapselwandung, sei es die einfache Wandung oder die weitere Kapselwandung, binden. Unter Verwendung von solchen Mikrokapseln hergestellte Papiere lassen sich bei der Produktion von Büropapieren, z. B. Formularsätzen, sehr einfach miteinander verbinden, insbesondere dann, wenn die Thermoplaste ultraschall-verschweißbar sind. Bei den für die Zusammenfügung von Büropapieren vorgesehenen Papieren können außerdem Mikrokapseln verwendet werden, bei denen im Kern zusätzliche Klebstoffkomponenten enthalten sind, die durch mechanische oder thermische Einwirkung auf die Mikrokapseln freigesetzt werden können.

Eine weitere Aufgabe der Erfindung ist es, ein Verfahren zur Herstellung der eingangs beschriebenen Mikrokapseln vorzuschlagen.

Diese Aufgabe wird erfindungsgemäß dadurch gelöst, daß die Polyreaktion des Wandmaterials auf einer ersten Stufe gestoppt wird, auf der eine im wesentlichen vollständige Kapselwandung vorhanden ist und auf der noch wesentliche Anteile reaktionsfähiger Gruppen vorhanden sind, und daß in einer weiteren Stufe eine Polyreaktion unter Einbeziehung der reaktionsfähigen Gruppen mit einer weiteren monomeren, oligomeren und/oder vorpolymeren Komponente durchgeführt wird.

Bei der Auswahl der Monomeren, Oligomeren und/oder Vorpolymeren wird man insbesondere dann, wenn die Elastizität und/oder die Druckfestigkeit der Wandung verbessert werden soll, mehrdimensional vernetzende Reaktanten entweder bereits bei der Bildung der Wandung oder aber in der weiteren Stufe verwenden. In der weiteren Stufe kann eine zusätzliche mehrdimensionale Vernetzung der Wandung der Kapsel herbeigeführt werden oder aber, wenn dies durch die Anforderungen an die Kapsel notwendig ist, sogar eine weitere, mit der Wandung chemisch verbundene Wandschicht gebildet werden.

Nach dem erfindungsgemäßen Verfahren wird also in einer ersten Stufe eine Mikrokapsel gebildet, die vorzugsweise eine solche Stabilität aufweist, daß sie von dem sie umgebenden Kontinuum oder Reaktionsmedium getrennt werden kann. Hier läßt sich dann in sehr definierter Weise in der weiteren Stufe ein unter Umständen gänzlich verschiedenes Reaktionsmedium einführen, wodurch die Möglichkeit gegeben ist, beispielsweise die Permabilität der Kapselwandung für bestimmte Substanzen zu beeinflussen, die Elastizität der Wandung in spezifischer Weise auszubilden, die Druckfestigkeit der Wandung zu verbessern oder aber deren Chemikalienbeständigkeit ganz spezifisch zu beeinflussen. Ebenso ist ein mehrschichtiger Aufbau der Gesamtwandung der Mikrokapseln auf chemischem Wege möglich, ebenso wie die Kopplung von Bindemittel zur Fixierung der Kapseln auf Papieroberflächen oder aber das chemische Koppeln von Thermoplasten an die Kapselwandung, die beispielsweise das Verbindung von Büropapieren, wie z. B. Formularsätzen, in der Produktion erleichtern.

Im folgenden wird anhand von zwei Beispielen und einem Vergleichsbeispiel aufgezeigt, welche Möglichkeiten sich durch das erfindungsgemäße Verfahren bei der Mikrokapselherstellung und der gezielten Einstellung von Mikrokapseleigenschaften ergeben.

Vergleichsbeispiel

10 g einer Melaminharzkapsel (Typ S 40 der Firma BASF) werden mit 2 g Methylethylketon in einem Reagenzglas innig miteinander vermischt und zwei Stunden bei Raumtemperatur gelagert.

Eine Prüfung des Zustandes der Kapselwandung ergibt, daß diese bei den Testbedingungen stark angegriffen bis zerstört wurde.

Die Zerstörung der Kapselwandung hält sich zum einen unter dem Mikroskop direkt nachweisen, wobei die Kapseln entweder stark aufgebläht erscheinen oder aber in sich zusammengefallen sind, wenn die Zersetzung der Kapselwandung schon weiter fortgeschritten ist und das Kernlösungsmittel aus dem Kapselinneren ausgetreten ist.

Eine zweite Nachweismethode für den Zustand der Kapselwandung besteht darin, das Kernlösungsmittel, d.h. das in der Kapsel durch die Kapselwandung eingeschlossene Lösungsmittel, in dem umgebenden Medium (hier Methylethylketon) nachzuweisen. Dies ist nur dann möglich, wenn die Kapselwandung durch die Testbedingungen so stark geschädigt wird, daß dieses von der Kapsel freigegeben wird.

Beispiel 1

Zu 8 g der Mikrokapsel des Typs S 40 werden 2 g eines carboxylierten Styrol-Butadien-Copolymerisats (Litex PS 5520; Warenzeichen der Firma HÜlS) zugegeben und innig miteinander vermischt und für 30 Minuten auf ca. 70° C gehalten. Danach wird die Mischung abgekühlt, und die so erhaltenen Mikrokapseln zeigen besonders gute Beständigkeit gegenüber Lösungsmitteln und Druckölen. Dies zeigt sich insbesondere bei Papierbeschichtungen unter Verwendung dieser Mikrokapseln, weshalb sich bei diesen Mikrokapseln eine wesentlich größere Variationsbreite in der Weiterverarbeitung bzw. in der Verwendung von sonstigen Komponenten in der Papierherstellung bzw. -beschichtung eröffnet.

Wichtig sind hier die Carboxyl-Gruppen des Copolymerisats, über die vorzugsweise die Anknüpfung an der Kapselwandung erfolgt.

Bei der Durchführung des Beständigkeitstests gemäß dem Vergleichsbeispiel findet man bei beiden Nachweismethoden eine kaum veränderte Kapselwandung vor, d.h. die Kapselwandung hält dem Lösungsmittel Methylethylketon weitestgehend stand.

## Beispiel 2

6 g der Mikrokapsel des Typs S 40 werden mit 4 g einer selbstvernetzenden Copolymerisatdispersion aus Acrylsäureester (Produkt Mobilit DM 707 der Firma Hoechst) innig miteinander vermischt und für ca. 30 Minuten auf 70° C erwärmt.

Nach der Abkühlung auf Raumtemperatur läßt sich diese Kapsel für die Papierbeschichtung verwenden und führt zu einer Ultraschall-Verschweißbarkeit der so beschichteten Papiersorten.

Bei der Durchführung des Testes gemäß dem Vergleichbeispiel ergibt sich auch hier eine weitgehende Beständigkeit der Kapselwandung gegen den Angriff des Lösungsmittels Methylethylketon. Dies bedeutet, daß nicht nur eine zusätzliche Eigenschaft der Kapsel, nämlich die Ultraschall-Verschweißbarkeit, erzielt werden konnte, sondern die Kapselwandung selbst konnte in einem Verfahrensschritt gleichzeitig zusätzlich stabilisiert werden. Im vorliegenden Fall läßt sich der Effekt durch Zugabe von Oxal- säure noch verstärken.

## Ansprüche

1. Mikrokapseln mit einem Kern und ein er diesen umgebenden, in einer Polyreaktion aus einem monomeren, oligomeren und/oder vorpolymerisierten Wandmaterial gebildeten Wandung, dadurch gekennzeichnet, daß an die Wandung chemisch ein weiteres Polymer gebunden ist.

2. Mikrokapseln nach Anspruch 1, dadurch gekennzeichnet, daß das weitere Polymer ein Mischpolymer ist.

3. Mikrokapseln nach Anspruch 1 oder 2, dadurch gekennzeichnet, daß das erste Wandmaterial mehrdimensional vernetzt ist.

4. Mikrokapseln nach einem oder mehreren der Ansprüche 1 bis 3, dadurch gekennzeichnet, daß das weitere Polymer mehrdimensional vernetzt ist.

5. Mikrokapseln nach einem oder mehreren der Ansprüche 1 bis 4, dadurch gekennzeichnet, daß das Wandmaterial ein polykondensiertes Polymer umfaßt.

6. Mikrokapseln nach einem oder mehreren der Ansprüche 1 bis 5, dadurch gekennzeichnet, daß das Wandmaterial ein Polyadditions-Polymer umfaßt.

7. Mikrokapseln nach einem oder mehreren der Ansprüche 1 bis 6, dadurch gekennzeichnet, daß das weitere Polymer ein Polykondensat umfaßt.

8. Mikrokapseln nach einem oder mehreren der Ansprüche 1 bis 7, dadurch gekennzeichnet, daß das weitere Polymer ein Polyadditions-Produkt umfaßt.

9. Mikrokapseln nach einem oder mehreren der Ansprüche 1 bis 8, dadurch gekennzeichnet, daß das Wandmaterial ein Polyurethanharz umfaßt.

10. Mikrokapseln nach Anspruch 9, dadurch gekennzeichnet, daß das Wandmaterial zwei unterschiedliche Polyurethanharze umfaßt.

11. Mikrokapseln nach einem oder mehreren der voranstehenden Ansprüche, dadurch gekennzeichnet, daß das weitere Polymer ein Bindemittel zur Fixierung der Kapseln an einer Papieroberfläche ist.

12. Mikrokapseln nach einem oder mehreren der Ansprüche 1 bis 10, dadurch gekennzeichnet, daß die Kapseln eine weitere Kapselwandung, die aus dem weiteren Polymer gebildet ist, umfassen.

13. Mikrokapseln nach einem oder mehreren der Ansprüche 1 bis 10, dadurch gekennzeichnet, daß das weitere Polymer ein Thermoplast ist.

14. Mikrokapseln nach Anspruch 13, dadurch gekennzeichnet, daß der Thermoplast Ultraschallverschweißbar ist.

15. Verwendung der Mikrokapseln nach einem oder mehreren der Ansprüche 1 bis 14, bei der Herstellung von Reaktionsdurchschreibepapieren.

16. Verfahren zur Herstellung von Mikrokapseln durch eine Polyreaktion aus einem monomeren, oligomeren und/oder vorpolymerisierten Wandmaterial, dadurch gekennzeichnet, daß die Polyreaktion des Wandmaterials auf einer ersten Stufe gestoppt wird, auf der eine Kapselwandung im wesentlichen vollständig ausgebildet ist und auf der noch wesentliche Anteile reaktionsfähiger Gruppen des Wandmaterials vorhanden sind, und daß in einer zweiten Stufe eine Polyreaktion unter Einbeziehung der reaktionsfähigen Gruppen mit einer weiteren polymerisierbaren Komponente durchgeführt wird.

17. Verfahren nach Anspruch 16, dadurch gekennzeichnet, daß das Wandmaterial mehrdimensional vernetzbar ist.

18. Verfahren nach Anspruch 16 oder 17, dadurch gekennzeichnet, daß die weitere polymerisierbare Komponente mehrdimensional vernetzbar ist.

19. Verfahren nach einem oder mehreren der Ansprüche 16 bis 18, dadurch gekennzeichnet, daß in der weiteren Stufe eine weitere Wandschicht gebildet wird.

20. Verfahren nach einem oder mehreren der Ansprüche 16 bis 19, dadurch gekennzeichnet, daß in der weiteren Stufe ein an sich bekanntes Bindemittel zur Fixierung der Kapseln auf Papieroberflächen chemisch an die Kapselwandung gebunden wird.

21. Verfahren nach einem oder mehreren der Ansprüche 16 bis 19, dadurch gekennzeichnet, daß in der weiteren Stufe ein an sich bekannter Thermoplast chemisch an die Kapselwandung gebunden wird.

22. Verfahren nach Anspruch 21, dadurch gekennzeichnet, daß der Thermoplast Ultraschall-verschweißbar ist.